(19) **Europäisches Patentamt / European Patent Office / Office européen des brevets**

(11) **EP 1 750 108 A1**

(12) # EUROPEAN PATENT APPLICATION

(43) Date of publication:
07.02.2007 Bulletin 2007/06

(51) Int Cl.:
*G01L 5/00* (2006.01)      *G01M 17/013* (2006.01)
*B60T 8/52* (2006.01)

(21) Application number: 06016271.6

(22) Date of filing: 03.08.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 05.08.2005 JP 2005227826
01.02.2006 JP 2006024298

(71) Applicant: **TOYOTA JIDOSHA KABUSHIKI KAISHA**
**Toyota-shi,**
**Aichi-ken 471-8571 (JP)**

(72) Inventor: **Isono, Hiroshi**
**Toyota-shi**
**Aichi-ken 471-8571 (JP)**

(74) Representative: **Winter, Brandl, Fürniss, Hübner Röss, Kaiser,**
**Polte Partnerschaft Patent- und Rechtsanwaltskanzlei**
**Alois-Steinecker-Strasse 22**
**85354 Freising (DE)**

(54) **Detection of forces and moments acting on rotating members**

(57)      The torque detection apparatus has a detector A1 and a computing unit B. The detector A1 includes a first rotating member 12 and a second rotating member 11 that are coaxially disposed, and that are capable of transferring torque and being relatively rotated in a forward rotation direction and a reverse rotation direction, a forward rotation-side load detection element S1a to S4a that is mounted on a forward rotation transfer side of each of the two rotating members 11, 12, and a reverse rotation-side load detection element S1b to S4b that is mounted on a reverse rotation transfer side of each of the two rotating members. The entire amount of the transfer torque transferred between the two rotating members 11, 12 is transferred via the forward rotation-side load detection element S I a to S4a and the reverse rotation-side load detection element S1b to S4b.

FIG.1

Printed by Jouve, 75001 PARIS (FR)

EP 1 750 108 A1

**Description**

BACKGROUND OF THE INVENTION

1. Field of the Invention

The invention relates to a detector apparatus capable of detecting the transfer load transferred between a first rotating member and a second rotating member that are disposed coaxially and are provided so as to be relatively rotatable and capable of transferring torque in the forward and reverse rotation directions.

2. Description of the Related Art

As an example of torque detection apparatuses and acting force detection apparatuses of this kind, an apparatus having a detector that includes: a forward rotation-side load detection element that is mounted on a forward rotation transfer side of each of a first rotating member and a second rotating member and that outputs an electric signal corresponding to the forward rotation-side transfer load, and a reverse rotation-side load detection element that is mounted on a reverse rotation transfer side of each of the first rotating member and the second rotating member and that outputs an electric signal corresponding to the reverse rotation-side transfer load; and a computing unit that computes a transfer torque and a vertical load (up-down force) transferred between the first rotating member and the second rotating member on the basis of the outputs of the forward rotation-side load detection element and the reverse rotation-side load detection element is disclosed, for example, in Japanese Patent Application Publication No. JP-A-2003-14563. (hereinafter, referred to as "Publication No. 2003-14563").

In the torque detection apparatus (tire-acting force detection apparatus) described in the aforementioned Publication No. 2003-14563, the wheel-side moving portion and the retainer-side moving portion (the first rotating member and the second rotating member) are mechanically coupled via a coupler that is elastically deformable at the time of relative displacement of the members. Integrally mounted on the elastically deformable coupler are one detection element (a strain gauge, a piezoelectric element, etc.) that strains due to elastic deformation of the coupler toward one side based on a relative displacement of the wheel-side moving portion from its neutral state toward one side relative to the retainer-side moving portion, and that converts the transfer load toward the one side into an electric signal and outputs the signal, and another detection element (a strain gauge, a piezoelectric element, etc.) that strains due to elastic deformation of the coupler toward the other side based on a relative displacement of the wheel-side moving portion from its neutral state toward the other side relative to the retainer-side moving portion, and that converts the transfer load toward the other side into an electric signal and outputs the signal.

However, the construction described in the Publication No. 2003-14563 has a possibility of the coupler elastically deforming in the rotating direction and also elastically deforming in radial directions and axial directions when the wheel-side moving portion and the retainer-side moving portion (the first rotating member and the second rotating member) relatively rotate. Therefore, it is difficult to detect, with good precision, the rotation direction loads that act on a torque transfer portion that includes the coupler (the forward rotation-side transfer load and the reverse rotation-side transfer load), and the vertical load that acts on a load transfer portion that includes the coupler.

Furthermore, in the construction of the Publication No. 2003-14563, a portion of the transfer torque transferred between the wheel-side moving portion and the retainer-side moving portion (the first rotating member and the second rotating member) is transferred via the detection elements, but the remainder of the transfer torque is transferred without passing through the detection elements. Therefore, it is difficult to detect the transfer torque with high precision. Furthermore, a portion of the vertical load transferred between the wheel-side moving portion and the retainer-side moving portion (the first rotating member and the second rotating member) is transferred via the detection elements, but the remainder of the vertical load is transferred without passing through the detection elements. Therefore, it is difficult to detect the vertical load with high precision.

SUMMARY OF THE INVENTION

A torque detection apparatus in accordance with a first aspect of the invention includes a detector that includes a first rotating member and a second rotating member that are coaxially disposed, and that are capable of transferring torque and being relatively rotated in a forward rotation direction and a reverse rotation direction, a forward rotation-side load detection element that is mounted on a forward rotation transfer side of each of the first rotating member and the second rotating member, and that converts a forward rotation-side transfer load which increases at a time of forward rotation and decreases at a time of reverse rotation, into an electric signal, and that outputs the electric signal, and a reverse rotation-side load detection element that is mounted on a reverse rotation transfer side of each of the first rotating member and the second rotating member, and that converts a reverse rotation-side transfer load which increases at a time of reverse rotation and decreases at a time of forward rotation, into an electric signal, and that outputs the electric signal. The torque detection appratus further includes a computing unit that computes a transfer torque between the first rotating member and the second rotating member based on an output of the forward rotation-side load detection element and an output of the reverse rotation-side load detection element. The torque detection appratus has a feature that an entire amount of the transfer torque transferred between the first rotating member and the second rotating member in the detector is transferred via the forward rotation-side load detection element and the reverse rotation-side load detection element.

In the torque detection apparatus in accordance with the first aspect, the entire transfer torque transferred between the first rotating member and the second rotating member is transferred via the forward rotation-side load detection element and the reverse rotation-side load detection element. Therefore, the forward rotation-side transfer load and the reverse rotation-side transfer load detected by the detector on the basis of the outputs of the forward rotation-side load detection element and the reverse rotation-side load detection element can be detected with high precision. Hence, the transfer torque obtained by computation in the computing unit can be provided with high precision.

In the first aspect, the detector may have load application means capable of applying a forward rotation-side transfer load to the forward rotation-side load detection element and also applying a reverse rotation-side transfer load to the reverse rotation-side load detection element.

According to this aspect, the load application means is also constraint means for constraining relatively rotation between the first rotating member and the second rotating member, and is thus capable of applying the forward rotation-side transfer load to the forward rotation-side load detection element and also applying the reverse rotation-side transfer load to the reverse rotation-side load detection element. Even at the time of no torque load, it is possible to apply load to each of the detection elements. Therefore, even at the time of no torque load, it is possible to obtain stable output of each of the detector elements. Furthermore, using the load application means, it is possible to eliminate the play and rattle in the rotation directions between the first rotating member and the second rotating member. Therefore, it is possible to eliminate the occurrence of unusual noise or friction caused by the aforementioned play and rattle.

In the foregoing aspect, the load application means may be adjustable in load by a screw. In this case, the load applied to the forward rotation-side load detection element and the reverse rotation-side load detection element can be continuously adjusted, and the outputs of the forward rotation-side load detection element and the reverse rotation-side load detection element at the time of no torque load can be optimally set (e.g., at an intermedaite value between the maximum output value and the mimimum output value).

Furthermore, in the foregoing aspect, the forward rotation-side load detection element and the reverse rotation-side load detection element may be disposed on the same circumference about a rotation center of the first rotating member and the second rotating member, and an absolute value of a gradient of output corresponding to the load on the forward rotation-side load detection element and an absolute value of output corresponding to the load on the reverse rotation-side load detection element may be set substantially equal.

According to this aspect, the transfer load between the first rotating member and the second rotating member can easily be computed on the basis of the outputs of the forward rotation-side load detection element and the reverse rotation-side load detection element. On the basis of the computed transfer load, the transfer torque between the first rotating member and the second rotating member can easily be computed by the computing unit.

Furthermore, in the foregoing aspect, the rotation center of the first rotating member and the second rotating member may extend in a horizontal direction, and at least one pair of forward rotation-side load detection elements and at least one pair of reverse rotation-side load detection elements may be disposed with a 180-degree phase difference for each pair in the rotation directions.

According to this aspect, the vertical-direction load input to the forward rotation-side load detection element and the vertical-direction load input to the reverse rotation-side load detection element can offset each other, and the forward rotation-side transfer load detected by the forward rotation-side load detection element and the reverse rotation-side transfer load detected by the reverse rotation-side load detection element can be detected with high precision.

In the foregoing aspect, each of the forward rotation-side load detection element and the reverse rotation-side load detection element may be at least one of a strain gauge and a piezoelectric element.

A torque detection method in accordance with a second aspect of the invention includes: reading in an average output of the forward rotation-side load detection element and an average output of the reverse rotation-side load detection element; performing abforwardity determination regarding the forward rotation-side load detection element and the reverse rotation-side load detection element; computing a voltage value corresponding to a transfer load based on a result of the abforwardity determination and computing the transfer load based on the voltage value; and calculating a transfer torque by multiplying the transfer load by a distance from the rotation center to the forward rotation-side load detection element and the reverse rotation-side load detection element.

In the second aspect, if both the forward rotation-side load detection element and the reverse rotation-side load detection element are forward, the voltage value $V_t$ corresponding to the transfer load $F$ may be computed based on a present value $V_{a1}$ of an average output $V_a$ of the forward rotation-side load detection element and a present value Vb1 of an average output Vb of the reverse rotation-side load detection element, using an equation: Vt=(Va1-Vb1)/2.

In the second aspect, if the forward rotation-side load detection element is forward and the reverse rotation-side load detection element is abforward, the voltage value Vt corresponding to the transfer load F may be calculated based on a present value Val of an average output Va of the forward rotation-side load detection element, which is forward, and fixed values Va2f, Vb2f which are average outputs of the forward rotation-side load detection element and the reverse rotation-side load detection element provided when both the forward rotation-side load detection element and the reverse rotation-side load detection element were last forward, using an equation:

$$Vt=(Va2f\text{-}Vb2f)/2 + (Va1\text{-}Va2f).$$

In the second aspect, if the forward rotation-side load detection element is abforward and the reverse rotation-side load detection element is forward, the voltage value Vt corresponding to the transfer load F may be calculated based on a present value Vb1 of an average output Vb of the reverse rotation-side load detection element, which is forward, and fixed values Va2f, Vb2f which are average outputs of the forward rotation-side load detection element and the reverse rotation-side load detection element provided when both the forward rotation-side load detection element and the reverse rotation-side load detection element were last forward, using an equation:

$$Vt=(Va2f\text{-}Vb2f)/2 + (Vb1\text{-}Vb2f).$$

An acting force detection apparatus in accordance with a third aspect of the invention has features of comprising: a first rotating member that integrally retains a rotating body that has, at an outer periphery thereof, an annular ground contact surface, and that rotates while rolling on the ground contact surface; a second rotating member that is provided so as to be relatively rotatable with respect to the first rotating member and be relatively displaceable in a radial direction with respect to the first rotating member, and that is integrally supported on a support; at least three coupling support portions disposed at predetermined intervals in a circumferential direction which each have a pair of force transfer paths that are disposed facing each other in the circumferential direction and that are capable of transferring a rotational load and a vertical load between the first rotating member and the second rotating member, and which couple the first rotating member and the second rotating member so that the rotational load and the vertical load on the first rotating member and the second rotating member are capable of being transferred; a forward rotation-side load detection element that is interposed in one of the pair of force transfer paths, and that converts a forward rotation-side transfer load which increases at a time of forward rotation when the first rotating member relatively rotates in one direction with respect to the second rotating member, and which decreases at a time of reverse rotation, into an electric signal, and that outputs the electric signal; a reverse rotation-side load detection element that is interposed in the other one of the pair of force transfer paths, and that converts a reverse rotation-side transfer load which increases at a time of reverse rotation when the first rotating member relatively rotates in the other direction with respect to the second rotating member, and which decreases at a time of forward rotation, into an electric signal, and that outputs the electric signal; and vertical load computation means for computing a vertical load transferred between the first rotating member and the second rotating member based on an output of the forward rotation-side load detection element and an output of the reverse rotation-side load detection element in a construction where an entire portion of the vertical load transferred between the first rotating member and the second rotating member is transferred via the force transfer paths, and via the forward rotation-side load detection element and the reverse rotation-side load detection element respectively interposed in the force transfer paths.

In the acting force detection apparatus according to the third aspect, the entire vertical load transferred between the first rotating member and the second rotating member is transferred via the forward rotation-side load detection element and the reverse rotation-side load detection element. Therefore, due to the vertical load computation means for computing the vertical load between the first rotating member and the second rotating member on the basis of the outputs of the forward rotation-side load detection element and the reverse rotation-side load detection element, the vertical load between the first rotating member and the second rotating member can be computed with high precision, and the vertical load between the first rotating member and the second rotating member can be detected with high precision.

In the third aspect, four coupling support portions may be disposed at equal intervals in the circumferential direction.

According to this aspect, the coupling support portions each having a forward rotation-side load detection element and a reverse rotation-side load detection element are disposed with 90-degree phase differences. Hence, the vertical load between the first rotating member and the second rotating member can easily be computed by using the square root of the sum of the squares of the calculated values obtained through computation of the output differences between the forward rotation-side load detection elements and between the reverse rotation-side load detection elements of 180-degree-phase-different two of the coupling support portions.

Furthermore, in the practice of the invention, a predetermined load may be able to be applied to at least one of the forward rotation-side load detection element and the reverse rotation-side load detection element by load application means that is provided on at least one of the force transfer paths. In this case, each force transfer path may have a ball that engages with a corresponding one of the detection elements, and a screw capable of pushing the ball toward the corresponding one of the detection elements, and an initial value of the transfer load between the first rotating member and the second rotating member may be adjustable by an amount of advancement/retraction of the screw.

According to the foregoing aspects, the load application means make it possible to correct the outputs of the forward rotation-side load detection element and the reverse rotation-side load detection element and to precisely adjust the initial state of the acting force detection apparatus. Furthermore, using the screws of the force transfer paths, it is possible to eliminate the play and rattle in the rotation directions and radial directions between the first rotating member and the second rotating member. Therefore, it is possible to eliminate the occurrence of unusual noise or friction caused by the aforementioned play and rattle.

In the foregoing aspect, center alignment means for aligning a center of the ball and an axis of the screw by press contact load may be provided between the screw and the ball. Furthermore, the center alignment means may be a spherical surface seat provided on a ball-side end portion of the screw, and a curvature of the spherical surface seat is set smaller than a curvature of the ball, and the screw contacts, on the spherical surface seat thereof, the ball. Furthermore, a ball seat capable of transferring load may be interposed between the ball and a corresponding one of the detection elements, and center alignment means for aligning a center of the ball and an axis of the ball seat by press contact load may be provided between the ball seat and the ball. The center alignment means may be a spherical surface seat provided on a ball-side end portion of the ball seat, and a curvature of the spherical surface seat may be set smaller than a curvature of the ball, and the ball seat contacts, on the spherical surface seat thereof, the ball. Furthermore, the center alignment means may be a tapered seat provided on a ball-side end portion of the ball seat.

According to the foregoing aspects, the ball has a point contact with the member on the center alignment means (spherical surface seat), which allows improvement in workability in adjusting the initial value of the transfer load transferred between the first rotating member and the second rotating member by the amount of advancement/retraction of the screw.

Furthermore, in the third aspect, the acting force detection apparatus may further include rotational load computation means for computing a rotational load transferred between the first rotating member and the second rotating member based on an output of the forward rotation-side load detection element and an output of the reverse rotation-side load detection element in a construction where an entire portion of the rotational load transferred between the first rotating member and the second rotating member is transferred via the force transfer paths, and via the forward rotation-side load detection element and the reverse rotation-side load detection element respectively interposed in the force transfer paths. In this case, the rotational load between the first rotating member and the second rotating member may be computed by the rotational load computation means on the basis of the outputs of the forward rotation-side load detection element and the reverse rotation-side load detection element. The forward rotation-side load detection element and the reverse rotation-side load detection element may be used not only for detection of vertical load but also for detection of rotational load.

BRIEF DESCRIPTION OF THE DRAWINGS

The foregoing and/or further objects, features and advantages of the invention will become more apparent from the following description of preferred embodiments with reference to the accompanying drawings, in which like numerals are used to represent like elements and wherein:

FIG. 1 is a vertical sectional side view showing a first embodiment of a detector in a torque/acting force detection apparatus according to the invention;
FIG 2 is a vertical sectional front view of portions of the detector shown in FIG. 1;
FIG. 3 is a schematic diagram of an electric construction of a torque/acting force detection apparatus in accordance with the detector shown in FIGS. 1 and 2;
FIG. 4 is a graph indicating a relationship between the voltage and the load obtained through each load detection element;
FIG. 5 is a flowchart of a program executed by a microcomputer of a signal processing device provided in a computing unit shown in FIG. 3;
FIG. 6 is a vertical sectional side view showing a second embodiment of the detector in a torque/acting force detection apparatus according to the invention;
FIG. 7 is a vertical sectional side view showing a third embodiment of the detector in a torque/acting force detection apparatus according to the invention;
FIG. 8 is a vertical sectional front view of portions of the detector shown in FIG. 7;
FIG. 9 is a flowchart of a program executed by a microcomputer of a signal processing device provided in a computing unit shown in FIG. 3;
FIG. 10 is an enlarged sectional view showing a modification in which a ball seat is interposed between the ball of each force transfer path, and the forward rotation-side load detection element and the reverse rotation-side load detection element thereof.

DETAILED DESCRIPTION OF THE PREFERRED EMBODIMENTS

Embodiments of the invention will be described hereinafter with reference to the accompanying drawings.

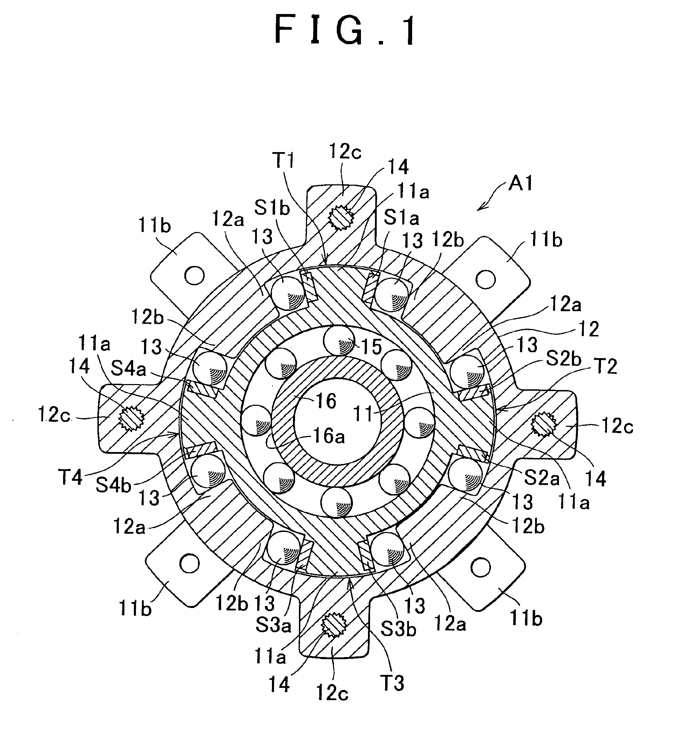

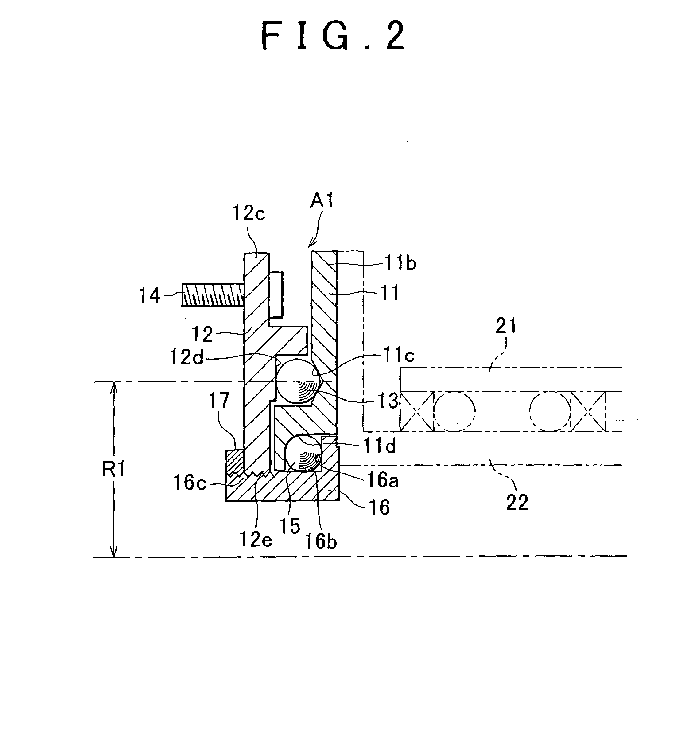

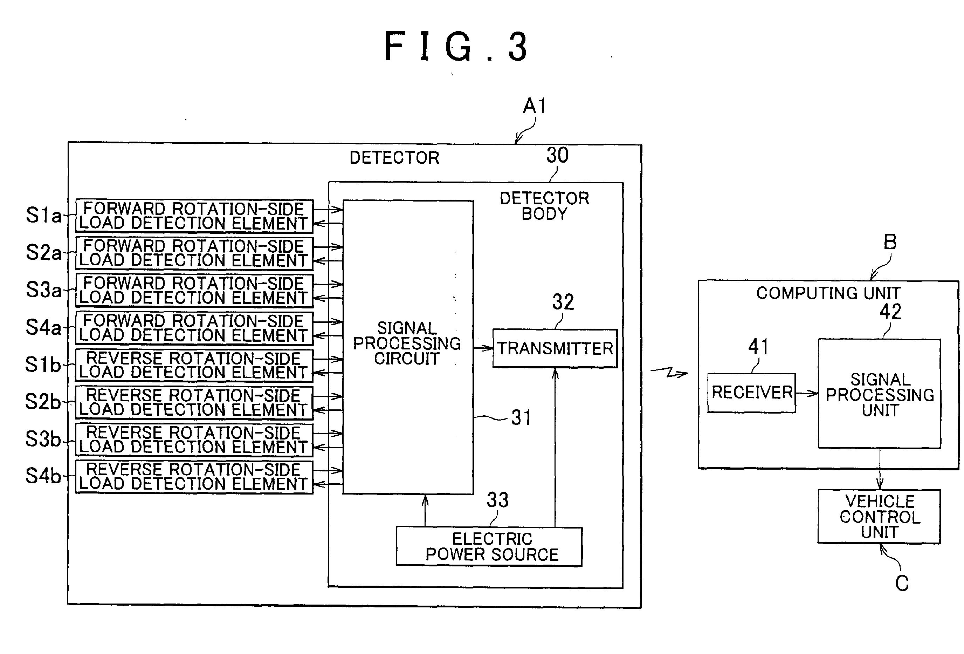

A first embodiment of the invention will be described below. FIGS. 1 to 5 illustrate the first embodiment. A torque detection apparatus of the first embodiment includes a detector A1 mounted between each wheel (not shown) of a vehicle and an axle hub 22 (see FIG. 2), a computing unit B (see FIG. 3) mounted on the vehicle body side.

Each detector A1 includes a hub-side housing 11 as a second rotating member, and a wheel-side housing 12 as a first rotating member, and also includes two pairs of (i.e., four) forward rotation-side load detection element S1a to S4a and two pairs of (i.e., four) reverse rotation-side load detection element S1b to S4b that are disposed with a 180-degree phase difference for each pair in the rotation directions on the same circumference (having a radius R1 as indicated in FIG. 2) about a horizontally extending rotation center of the hub-side housing 11 and the wheel-side housing 12.

The hub-side housing 11 and the wheel-side housing 12 are coaxially disposed, and are capable of transferring torque in a forward rotation direction (the clockwise direction in FIG. 1) and a reverse rotation direction (the counterclockwise direction in FIG. 1) and capable of being relatively rotated. Four torque transfer portions T1 to T4 are provided between the hub-side housing 11 and the wheel-side housing 12, and are disposed at equal intervals (intervals of 90 degrees) in the rotation directions.

Each of the torque transfer portions T1 to T4 includes a pair of balls 13, 13 disposed at a predetermined interval in the rotation directions between the hub-side housing 11 and the wheel-side housing 12, a protrusion portion 11a formed integrally with the hub-side housing 11 and interposed between the balls 13, 13, and a pair of retainer walls 12a, 12b formed integrally with the wheel-side housing 12 and capable of transferring torque to or from the protrusion portion 11a via the balls 13, and also includes a forward rotation-side load detection element S1a to S4a and a reverse rotation-side load detection element S1b to S4b that are mounted at ball receiving sites (sites that each receive a corresponding one of the balls 13) of the protrusion portion 11a so as to detect the rotation direction load transferred to or from the corresponding balls 13.

The hub-side housing 11 is integrally mounted on the axle hub 22 that is rotatable in an axle housing 21, at four flange portions 11b of the hub-side housing 11 that are provided at equal intervals (intervals of 90 degrees) in the rotation directions. The wheel-side housing 12 supports a tire wheel (not shown), via hub bolts 14 mounted on four flange portions 12c that are provided at equal intervals (intervals of 90 degrees) in the rotation directions.

The balls 13, together with the hub-side housing 11 and the wheel-side housing 12, make up a thrust ball bearing. While the balls 13 are retained along a guide groove 11c having a V shape in section which is formed on a side of the hub-side housing 11 (an engaging surface that engages with the balls 13 in the axial direction as shown in FIG. 2) at a radius of R1 from the rotation center (the balls 13 are restricted in radial movements), the balls 13 are engaged with the other-side surface 12d of the wheel-side housing 12 so as to be rollable on the other-side surface 12d.

In the first embodiment, many balls 15, a stepped sleeve 16 and a lock nut 17 are assembled for the hub-side housing 11 and the wheel-side housing 12. The hub-side housing 11 and the balls 13 to 13, 15 to 15 are held in the axial direction between the wheel-side housing 12 and the stepped sleeve 16.

The balls 15, together with the stepped sleeve 16 and the hub-side housing 11, make up an angular ball bearing. The balls 15 are retained by a cage (a not-shown retainer) at substantially equal intervals in the rotation directions and, at the same time, each ball 15 is engaged, in a single-point contact fashion, with an annular outer ring raceway surface 11d that is provided on the other side of an inner peripheral portion (an inner peripheral portion in FIG. 2) of the hub-side housing 11, and is engaged, in a two-point contact fashion, with annular inner ring raceway surfaces 16a, 16b that are provided on an outer periphery of the stepped sleeve 16.

The stepped sleeve 16 has a male thread portion 16c that is formed on a left end-side outer periphery as shown in FIG. 2. The male thread portion 16c is coupled to a female thread portion 12e formed on an inner periphery of the wheel-side housing 12, in such a manner that the amount of screwing can be adjusted in the axial directions. The stepped sleeve 16 is secured and retained by the lock nut 17 that is screwed to the male thread portion 16c. The stepped sleeve 16 faces the end surface of the axle hub 22 with a small gap in the axial directions therebetween, so that even if the thread coupling with the wheel-side housing 12 loosens, the stepped sleeve 16 will contact the end surface of the axle hub 22 and will thus be prevented from falling off.

In the first embodiment, the entire transfer torques (the entire transfer torque during forward rotation and the entire transfer torque during reverse rotation) transferred between the hub-side housing 11 and the wheel-side housing 12 are transferred via four forward rotation-side load detection elements S1a to S4a and four reverse rotation-side load detection elements S1b to S4b.

Each forward rotation-side load detection element S1a to S4a is mounted on the forward rotation side of the hub-side housing 11 and the wheel-side housing 12, and converts the rotation direction load that increases at the time of forward rotation and decreases at the time of reverse rotation (the forward rotation-side transfer torque that is transferred between the balls 13 and the forward rotation-side load detection elements S1a to S4a), into an electric signal (voltage V1), and outputs the electric signal. Each forward rotation-side load detection element S1a to S4a is, for example, a strain gauge, a piezoelectric element, etc. Each forward rotation-side load detection element S1a to S4a is wire-connected so that the output (voltage V1) thereof passes to a detector body 30 as shown in FIG. 3.

Each reverse rotation-side load detection element S1b to S4b is mounted on the reverse rotation side of the hub-side housing 11 and the wheel-side housing 12, and converts the rotation direction load that increases at the time of reverse rotation and decreases at the time of forward rotation (the reverse rotation-side transfer torque that is transferred between the balls 13 and the reverse rotation-side load detection elements S1b to S4b), into an electric signal (voltage V2), and outputs the electric signal. Each reverse rotation-side load detection element S1b to S4b is, for example, a strain gauge, a piezoelectric element, etc. Each reverse rotation-side load detection element S1b to S4b is wire-connected so that the output (voltage V2) thereof passes to the detector body 30 as shown in FIG. 3.

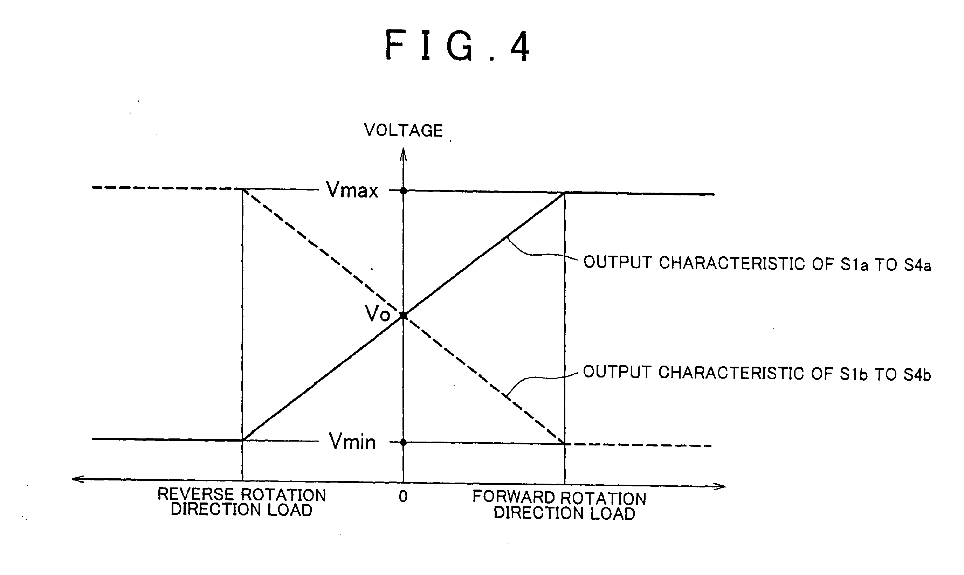

Furthermore, in the first embodiment, as shown in FIG. 4, the absolute value of the gradient of the output corresponding to the rotation direction load (transfer load) on each forward rotation-side load detection element S1a to S4a and the absolute value of the gradient of the output corresponding to the rotation direction load on each reverse rotation-side load detection element S1b to S4b are set substantially equal to each other. In addition, the outputs of each forward rotation-side load detection element S1a to S4a and each reverse rotation-side load detection element S1b to S4b at the time of no torque load (when the transfer load is zero) are set at an intermediate value Vo that is between a maximum output value Vmax and a minimum output value Vmin.

The detector body 30 includes a signal processing circuit 31, a transmitter 32, an electric power source 33, etc., as conceptually illustrated by a block diagram in FIG. 3. The detector body 30 is integrally secured to the hub-side housing 11. The signal processing circuit 31 computes an average output Va of the outputs of the four forward rotation-side load detection elements S1a to S4a, and an average output Vb of the outputs of the four reverse rotation-side load detection elements S1b to S4b, and then supplies the average outputs Va, Vb to the transmitter 32. The transmitter 32 transmits the supplied average outputs Va, Vb of the load detection elements S1a to S4a, S1b to S4b, as electromagnetic waves, to a receiver 41 of the computing unit B. The electric power source 33 supplies electric power that is needed for the operations of each load detection element S1a to S4a, S1b to S4b, the signal processing circuit 31, the transmitter 32, etc.

The computing unit B, as conceptually illustrated by a block diagram in FIG. 3, includes the receiver 41, a signal processing device 42, etc., and is mounted on the vehicle body side, and is connected to a vehicle control device C. The receiver 41 supplies the average outputs Va, Vb received from the transmitter 32, to the signal processing device 42.

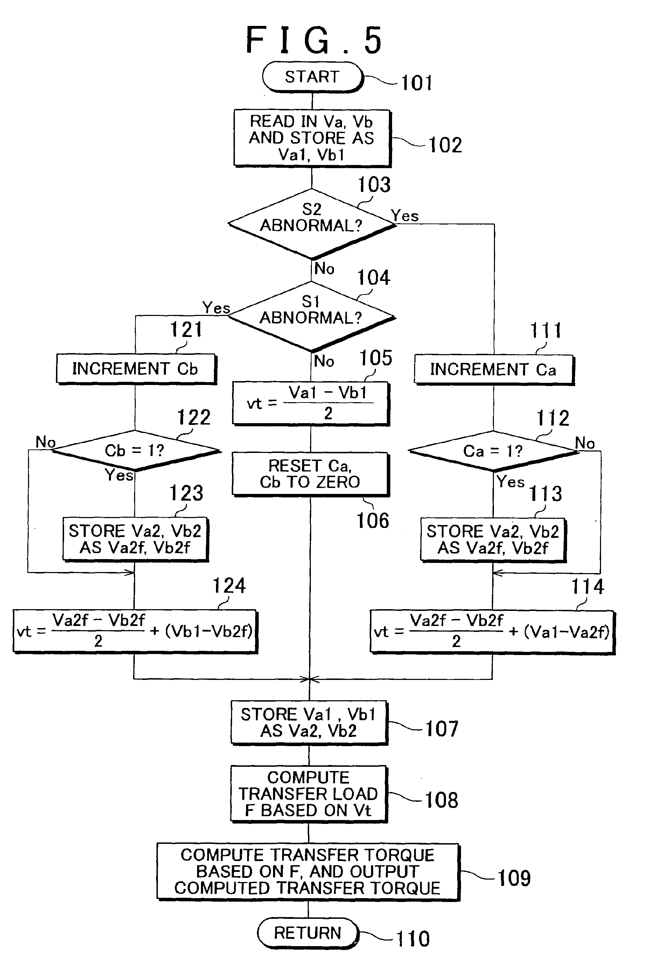

The signal processing device 42 has a microcomputer that repeatedly executes a program corresponding to the flowchart of FIG. 5, in every predetermined very short computation cycle. The signal processing device 42 supplies (outputs) the transfer torque between the hub-side housing 11 and the wheel-side housing 12 computed on the basis of the average outputs Va, Vb from the receiver 41, to the vehicle control device C. The vehicle control device C includes an actuator (not shown) that controls the state of the vehicle, and a controller (not shown) that drives the actuator and controls the state of driving the actuator.

In the torque detection apparatus of the first embodiment constructed as described above, while the ignition switch (not shown) of the vehicle is on, the microcomputer of the signal processing device 42 repeatedly executes the program corresponding to the flowchart of FIG. 5 in every predetermined very short cycle to compute a transfer torque that is needed at the vehicle control device C, on the basis of the average outputs Va, Vb from the receiver 41, and stores it in the signal processing device 42, and supplies it to the vehicle control device C.

The microcomputer of the signal processing device 42 starts the process at step 101 in FIG. 5, and reads in the average output Va of the forward rotation-side load detection elements S1a to S4a and the average output Vb of the reverse rotation-side load detection elements S1b to S4b, and stores the average outputs as present values Va1, Vb1. At step 103, the microcomputer determines whether or not any one of the reverse rotation-side load detection elements S1b to S4b is abforward. At step 104, the microcomputer determines whether or not any one of the forward rotation-side load detection elements S 1 a to S4a is abforward.

If the reverse rotation-side load detection elements S1b to S4b are forward, the determination of "No" is made at step 103. If the forward rotation-side load detection elements S1a to S4a are forward, the determination of "No" is made at step 104. Then, steps 105 to 110 are executed. If any one of the reverse rotation-side load detection elements S1b to S4b is abforward, the determination of "Yes" is made at step 103. Then, steps 111 to 114 are executed. After that, steps 107 to 110 are executed. If the reverse rotation-side load detection element S1b to S4b are forward and any one of the forward rotation-side load detection elements S1a to S4a is abforward, the determination of "Yes" is made at step 104. Then, steps 121 to 124 are executed. After that, steps 107 to 110 are executed.

At step 103, it is determined whether or not the ratio (Vb1-Vb2)/(Va1-Va2) between a difference (Vb1-Vb2) between the present value Vb1 and the previous value Vb2 (an initial value Vo only in the initial cycle) of the average output Vb of the reverse rotation-side load detection elements S1b to S4b and a difference (Va1-Va2) between the present value Va1 and the previous value Va2 (the initial value Vo only in the initial cycle) of the average output Va of the forward rotation-side load detection elements S1a to S4a is within the range of $-\alpha1$ to $+\alpha1$ ($\alpha1=0.2$), and also whether or not (Va1$\neq$Va2). If these determinations are both "Yes", the determination of "Yes" is made at step 103; otherwise, the determination of "No" is made at step 103.

At step 104, it is determined whether or not the ratio (Va1-Va2)/(Vb1-Vb2) between a difference (Va1-Va2) between the present value Va1 and the previous value Va2 (the initial value Vo only in the initial cycle) of the average output Va of the forward rotation-side load detection elements S1a to S4a and a difference (Vb1-Vb2) between the present value Vb1 and the previous value Vb2 (the initial value Vo only in the initial cycle) of the average output Vb of the reverse rotation-side load detection elements S1b to S4b is within the range of $-\alpha1$ to $+\alpha1$ ($\alpha1=0.2$), and also whether or not (Vb1#Vb2). If these determinations are both "Yes", the determination of "Yes" is made at step 104; otherwise, the determination of "No" is made at step 104.

Therefore, if the load detection elements S1a to S4a, S1b to S4b are forward, a voltage value Vt corresponding to the transfer load F is computed at step 105 from the following equation 1 on the basis of the present value Val of the average output Va of the forward rotation-side load detection elements S1a to S4a and the present value Vb1 of the average output Vb of the reverse rotation-side load detection elements S1b to S4b.

$$Vt=(Va1-Vb1)/2 \quad \text{(equation 1)}$$

Furthermore, at step 106, the count value Ca of a first counter and the count value Cb of a second counter contained in the signal processing device 42 are both reset to zero. Subsequently at step 107, the present value Val of the average output Va of the forward rotation-side load detection elements S1a to S4a is stored as a previous value Va2, and the present value Vb1 of the average output Vb of the reverse rotation-side load detection elements S1b to S4b is stored as a previous value Vb2. At step 108, a transfer load F is computed with reference to a "map indicating a relationship between the voltage value and the transfer load" (a pre-stored map corresponding to FIG. 4) on the basis of the voltage value corresponding to the transfer load F. At step 109, a transfer torque is computed on the basis of the transfer load F, that is, by multiplying the transfer load F by the radius R1 (the distance from the rotation center to the positions of the detection elements S1, S2), and then is output. At step 110, the execution of the program is ended.

If the forward rotation-side load detection elements S1a to S4a are forward and any one of the reverse rotation-side load detection elements S1b to S4b is abforward, the count value Ca of the first counter is incremented at step 111, and then it is determined at step 112 whether or not the count value Ca of the first counter is "1". In the initial cycle that immediately follows the change of the reverse rotation-side load detection elements S1b to S4b from forwardity to abforwardity, the count value Ca of the first counter is "1"; therefore, the determination of "Yes" is made at step 112, and steps 113 and 114 are executed. In cycles other than the initial cycle, the count value Ca of the first counter is "2" or greater; therefore, the determination of "No" is made at step 112, and step 114 is executed without executing step 113.

At step 113, the previous values Va2, Vb2 of the average outputs Va, Vb are stored as fixed values Va2f, Vb2f. At step 114, a voltage value Vt corresponding to the transfer load F is computed from the following equation 2 on the basis of the present value Va1 of the average output Va of the forward rotation-side load detection elements S1a to S4a, which are forward, and the fixed values Va2f, Vb2f obtained at step 113.

$$Vt=(Va2f-Vb2f)/2 + (Va1-Va2f) \quad \text{(equation 2)}$$

Incidentally, the execution of step 114 is followed by the execution of steps 107 to 110.

If any one of the forward rotation-side load detection elements S1a to S4a is abforward and the reverse rotation-side load detection elements S1b to S4b are forward, the count value Cb of a second counter is incremented at step 121, and then it is determined at step 122 whether or not the count value Cb of the second counter is "1". In the initial cycle that immediately follows the change of the forward rotation-side load detection elements S1a to S4a from forwardity to abforwardity, the count value Cb of the second counter is "1"; therefore, the determination of "Yes" is made at step 122, and steps 123 and 124 are executed. In cycles other than the initial cycle, the count value Cb of the second counter is "2" or greater; therefore, the determination of "No" is made at step 122, and step 124 is executed without executing step 123.

At step 123, the previous values Va2, Vb2 of the average outputs Va, Vb are stored as fixed values Va2f, Vb2f. At step 124, a voltage value Vt corresponding to the transfer load F is computed from the following equation 3 on the basis of the present value Vb1 of the average output Vb of the reverse rotation-side load detection elements S1b to S4b, which are forward, and the fixed values Va2f, Vb2f obtained at step 123.

$$Vt=(Va2f-Vb2f)/2 + (Vb1-Vb2f) \quad (equation\ 3)$$

Incidentally, the execution of step 124 is followed by the execution of steps 107 to 110.

In the torque detection apparatus of the first embodiment, the entire transfer torque transferred between the hub-side housing 11 and the wheel-side housing 12 is transferred via the forward rotation-side load detection elements S1a to S4a and the reverse rotation-side load detection elements S1b to S4b. Therefore, due to the average outputs Va, Vb of the forward rotation-side load detection elements S1a to S4a and the reverse rotation-side load detection elements S1b to S4b, the forward rotation-side transfer load and the reverse rotation-side transfer load detected by the detector A1 can be detected with high precision. Therefore, the transfer torque obtained through computation in the computing unit B can be made a high-precision value.

Furthermore, the forward rotation-side load detection elements S1a to S4a and the reverse rotation-side load detection elements S1b to S4b are disposed on the same circumference about the rotation center of the hub-side housing 11 and the wheel-side housing 12, and the absolute value of the gradient of the output corresponding to the rotation direction load of the forward rotation-side load detection elements S1a to S4a and the absolute value of the gradient of the output corresponding to the rotation direction load of the reverse rotation-side load detection elements S1b to S4b are set substantially equal to each other. Therefore, the transfer load F between the hub-side housing 11 and the wheel-side housing 12 can easily be computed on the basis of the average outputs Va, Vb of the forward rotation-side load detection elements S1a to S4a and the reverse rotation-side load detection elements S1b to S4b (see steps 105 and 108 in FIG. 5). In addition, on the basis of the computed transfer load F, the transfer torque between the hub-side housing 11 and the wheel-side housing 12 can easily be computed (see step 109).

Furthermore, the rotation center of the hub-side housing 11 and the wheel-side housing 12 extends in a horizontal direction, and two pairs of forward rotation-side load detection elements S1a to S4a and two pairs of reverse rotation-side load detection elements S1b to S4b are disposed with a 180-degree phase difference for each pair in the rotation directions. Therefore, the vertical load input to the forward rotation-side load detection elements S1a to S4a and the vertical load input to the reverse rotation-side load detection elements S1b to S4b can offset each other, and the forward rotation-side transfer load detected by the forward rotation-side load detection elements S1a to S4a and the reverse rotation-side transfer load detected by the reverse rotation-side load detection elements S1b to S4b can be detected with high precision.

In the detector A1 of the first embodiment, the load detection elements S1a to S4a, S1b to S4b are mounted on the sites on the protrusion portions 11 a of the hub-side housing 11 which receive the balls 13 in the circumferential direction, so as to realize the invention. However, the load detection elements S1a to S4a, S1b to S4b may also be mounted on the sites on the retainer walls 12a, 12b of the wheel-side housing 12 which receive the balls 13 in the circumferential direction, so as to realize the invention.

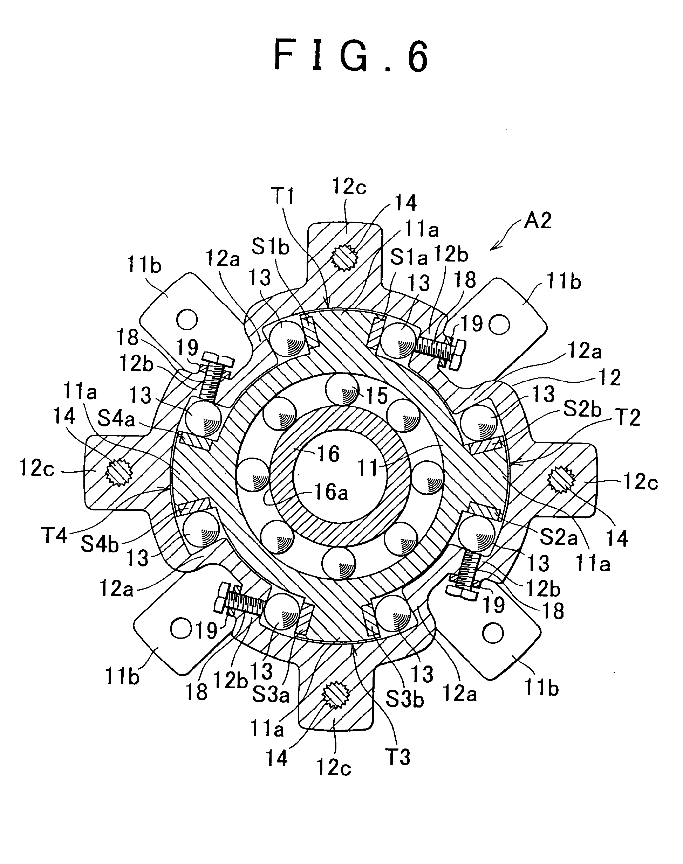

A second embodiment of the invention will be described hereinafter. In the detector A1 of the first embodiment, the balls 13, 13 in each torque transfer portion T1 to T4 are simply interposed between the retainer walls 12a, 12b and the load detection elements S1a to S4a, S1b to S4b, as shown in FIG. 1. However, it is also possible to embody the invention as in a detector A2 of the second embodiment shown in FIG. 6, in which each retainer wall 12b is provided with an adjustment screw 18 and a lock nut 19 (i.e., a load application means which is also a constraint means for constraining the relative rotation between the hub-side housing 11 and the wheel-side housing 12). In this case, by advancing or retracting an adjuster bolt 18 with respect to the retainer wall 12b, the engagement load between the pair of balls 13, 13 and the pair of detection elements S1a to S4a, S1b to S4b can be continuously adjusted, and the state after adjustment can be secured and retained by the lock nut 19.

Therefore, if the detector A2 of the second embodiment is used, it is possible to apply forward rotation-side transfer load to the forward rotation-side load detection elements S1a to S4a and simultaneously apply reverse rotation-side transfer load to the reverse rotation-side load detection elements S1b to S4b. Even at the time of no torque load, it is possible to apply load to each of the detection elements S1a to S4a, S1b to S 14. Therefore, even at the time of no torque load, it is possible to obtain stable output of each of the detector elements S1a to S4a, S1b to S4b. Furthermore, using the adjustment screw 18 and the lock nut 19 (load application means), relative rotation between the hub-side housing 11 and the wheel-side housing 12 can be constrained to eliminate the play and rattle in the rotation directions between the hub-side housing 11 and the wheel-side housing 12. Thus, it is possible to eliminate the occurrence of unusual noise or friction caused by the aforementioned play and rattle.

Furthermore, as for the detector A2 of the second embodiment, load adjustment can be done by advancing and retracting the adjustment screw 18. Therefore, the load applied to each one of the forward rotation-side load detection elements S1a to S4a and the reverse rotation-side load detection elements S1b to S4b can be continuously adjusted. Thus, the output of each of the forward rotation-side load detection elements S1a to S4a and the reverse rotation-side load detection elements S1b to S4b at the time of no torque load can easily be set at, for example, an intermediate value Vo between a maximum output value Vmax and a minimum output value Vmin.

While in the second embodiment, each retainer wall 12b is provided with an adjustment screw 18 and a lock nut 19 (a load application means) so that the load applied to each of the forward rotation-side load detection elements S1a to S4a and the reverse rotation-side load detection elements S1b to S4b can be continuously adjusted, it is also possible to provide each of the retainer walls 12b and the retainer walls 12a with an adjustment screw 18 and a lock nut 19 (a load application means) so that the load applied to each of the forward rotation-side load detection elements S 1 a to S4a and the reverse rotation-side load detection elements S1b to S4b can be continuously adjusted.

Furthermore, while in the first and second embodiments, the average output Va of the load detection elements S1a to S4a, and the average output Vb of the load detection elements S1b to S4b are computed in the signal processing circuit 31 of the detector body 30, it is also possible to compute the average output Va of the load detection elements S1a to S4a and the average output Vb of the load detection elements S1b to S4b in the signal processing device 42 of the computing unit B. In that case, the average outputs Va, Vb of the load detection elements S1a to S4a, S1b to S4b are computed before step 102 shown in FIG. 5 is executed.

Still further, while in the first and second embodiments, the invention is applied to the detection of the transfer torque that is transferred between a tire wheel and the axle hub, the invention is also applicable to various transfer torque detection portions that are different from the first and second embodiments.

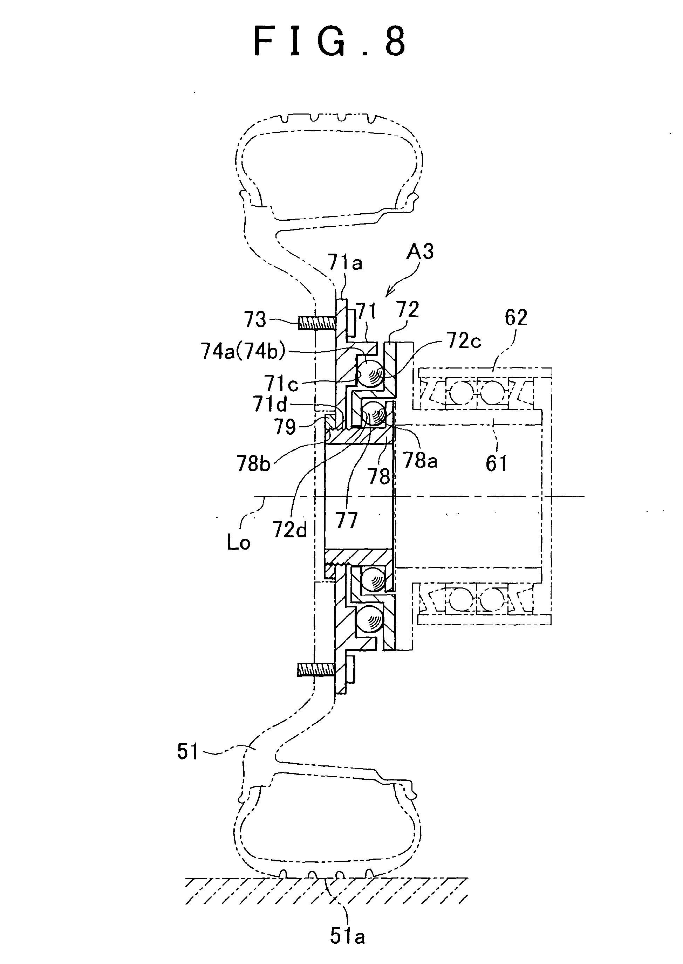

A third embodiment of the invention will now be described. FIGS. 3, 4, and 7 to 9 illustrate an acting force detection apparatus in accordance with the invention. This acting force detection apparatus includes a detector A3 mounted between each tire wheel 51 of a vehicle and an axle hub 61 (see FIG. 8), and a computing unit B (see FIG. 3) mounted on the vehicle body side. The axle hub 61 is rotatably supported on an axle housing 62. In the description of this embodiment, the description of the detector A1 shown in FIG. 3 is utilized, with the detector A1 replaced by the detector A3.

Each detector A3 has a wheel-side housing 71 as a first rotating member, and a hub-side housing 72 as a second rotating member. The wheel-side housing 71 has a plurality of flange portions 71 a. At the flange portions 71 a, the wheel-side housing 71 integrally retains a wheel 51, via bolts 73 and nuts (not shown). The wheel 51 is a rotating body that has, at its outer periphery, an annular ground contact surface 51a, and that rotates while rolling on its ground contact surface 51 a. The hub-side housing 72 is provided so as to be relatively rotatable by a predetermined amount with respect to the wheel-side housing 71 and be relatively displaceable by a predetermined amount in radial directions (directions of diameter) with respect to the wheel-side housing 71. The hub-side housing 72 has a plurality of flange portions 72a. The hub-side housing 72 is integrally supported, at its flange portions 72a, on flange portions (not shown) of the axle hub 61 as a support member, via bolts and nuts (neither of which are shown).

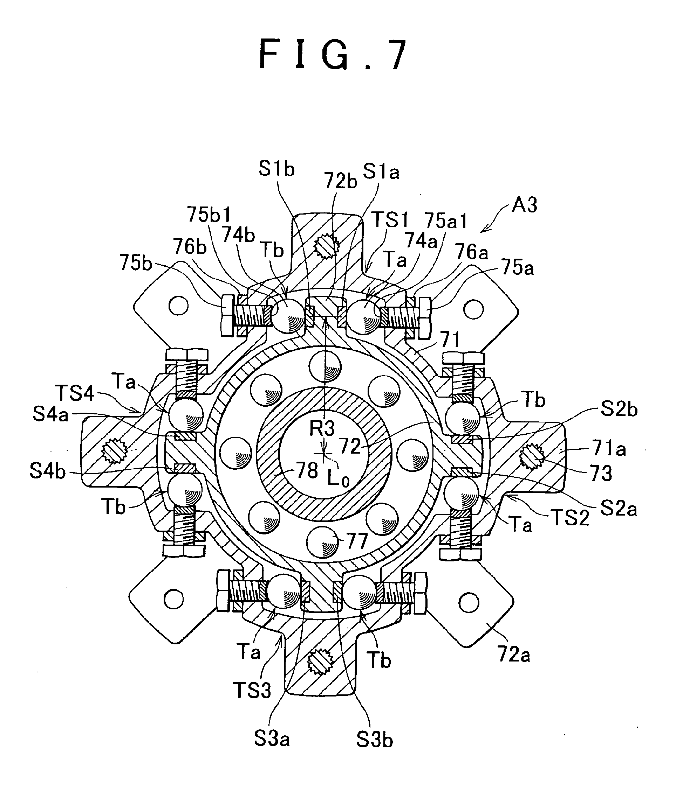

The wheel-side housing 71 and the hub-side housing 72 are coaxially disposed, and are coupled so as to be capable of transferring rotational load and vertical load via four coupling support portions TS1 to TS4 that are disposed at equal intervals in the circumferential direction (intervals of 90 degree). As shown in FIG. 7, each coupling support portion TS 1 to TS4 is provided with a pair of force transfer paths Ta, Tb and with a forward rotation-side load detection element S1a to S4a and a reverse rotation-side load detection element S1b to S4b.

Each pair of force transfer paths Ta, Tb are disposed facing each other in the circumferential direction, and are capable of transferring rotational load and vertical load between the wheel-side housing 71 and the hub-side housing 72. One force transfer path Ta of each pair has a ball (steel ball) 74a and a screw 75a, and is provided with an interposed forward rotation-side load detection element S1a to S4a. The other force transfer path Tb also has a ball (steel ball) 74b and a screw 75b, and is provided with an interposed reverse rotation-side load detection element S1b to S4b.

Each forward rotation-side load detection element S1a to S4a converts the forward rotation-side transfer load that increases at the time of forward rotation when the wheel-side housing 71 relatively rotates in one direction with respect to the hub-side housing 72 (when the wheel-side housing 71 relatively rotates counterclockwise in FIG. 7), and decreases at the time of reverse rotation (when the wheel-side housing 71 relatively rotates clockwise in FIG. 7), into an electric signal, and outputs the electric signal. Each forward rotation-side load detection element S1a to S4a is, for example, a strain gauge, a piezoelectric element, etc. Each forward rotation-side load detection element S1a to S4a is wire-connected so that the output (voltage) thereof passes to a detector body 30 as shown in FIG. 3. Furthermore, the forward rotation-side load detection elements S1a to S4a are disposed at equal intervals (intervals of 90 degrees) on the same circumference (having a radius R3 as indicated in FIG. 7) about a horizontally extending rotation center Lo of the wheel-side housing 71 and the hub-side housing 72, and are each fixed to a circumferentially facing end surface of a radially protruded protrusion 72b that is formed on the hub-side housing 72.

Each screw 75a is screwed into the wheel-side housing 71 so as to be advanceable and retractable. Each screw 75a is capable of pushing the ball (steel ball) 74a that engages with the forward rotation-side load detection element S1a to S4a, in the direction to the forward rotation-side load detection element S1a to S4a, and is capable of applying a predetermined load to the forward rotation-side load detection element S1a to S4a. A ball 74a-side end portion of each screw 75a has a spherical surface seat 75a1 whose curvature is less than the curvature of the surface of the ball 74a. On its spherical surface seat 75a1, the screw 75a contacts the ball 74a. The screw coupling position of each screw 75a can be fixed by a lock nut 76a.

Each reverse rotation-side load detection element S1b to S4b converts the reverse rotation-side transfer load that increases at the time of reverse rotation when the wheel-side housing 71 relatively rotates in the other direction with respect to the hub-side housing 72 and decreases at the time of forward rotation, into an electric signal, and outputs the electric signal. Each reverse rotation-side load detection element S1b to S4b is, for example, a strain gauge, a piezoelectric element, etc. Each reverse rotation-side load detection element S1b to S4b is wire-connected so that the output (voltage) thereof passes to the detector body 30 as shown in FIG. 3. Furthermore, the reverse rotation-side load detection elements S1b to S4b are disposed at equal intervals (intervals of 90 degrees) on the same circumference (having a radius R3 as indicated in FIG. 7) about the horizontally extending rotation center Lo of the wheel-side housing 71 and the hub-side housing 72, and are each fixed to the other circumferentially facing end surface of the radially protruded protrusion 72b that is formed on the hub-side housing 72.

Each screw 75b is screwed into the wheel-side housing 71 so as to be advanceable and retractable. Each screw 75b is capable of pushing the ball (steel ball) 74b that engages with the reverse rotation-side load detection element S1b to S4b, in the direction to the reverse rotation-side load detection element S1b to S4b, and is capable of applying a predetermined load to the reverse rotation-side load detection element S1b to S4b. A ball 74b-side end portion of each screw 75b has a spherical surface seat 75b1 whose curvature is less than the curvature of the surface of the ball 74b. On its spherical surface seat 75b1, the screw 75b contacts the ball 74b. The screw coupling position of each screw 75b can be fixed by a lock nut 76b.

Furthermore, the wheel-side housing 71 and the hub-side housing 72 are coupled via the balls (steel balls) 74a and the balls (steel balls) 74b of the four coupling support portions TS1 to TS4, and many balls (steel balls) 77 and a stepped sleeve 78, so as to be capable of transferring load in the axial directions.

The balls 74a and 74b are held in the axial directions by the wheel-side housing 71 and the hub-side housing 72, and have a single-point contact with a vertical surface 71c provided on an end surface of the wheel-side housing 71 which faces the hub-side housing 72, and have a single-point contact with a vertical surface 72c provided on an end surface of the hub-side housing 72 which faces the wheel-side housing 71. In this construction, it is possible to transfer axial direction load between the wheel-side housing 71 and the hub-side housing 72, but it is impossible to transfer rotational load or vertical load between the wheel-side housing 71 and the hub-side housing 72.

The balls 77 are held in the axial directions by the stepped sleeve 78 and the hub-side housing 72, and are retained by a cage (a not-shown retainer) at substantially equal intervals in the circumferential direction, and have a single-point contact with an annular vertical surface 72 provided in an inner peripheral portion of the hub-side housing 72, and have a single-point contact with an annular vertical surface 78a provided on an outer peripheral portion of the stepped sleeve 78. In this construction, it is possible to transfer axial-direction load between the wheel-side housing 71 and the hub-side housing 72, but it is impossible to transfer rotational load or vertical load between the wheel-side housing 71 and the hub-side housing 72.

The stepped sleeve 78 has a male thread portion 78b that is formed on an outer periphery of a small-diameter portion. The male thread portion 78b is coupled to a female thread portion 71d formed on an inner periphery of the wheel-side housing 71, in such a manner that the amount of screwing can be adjusted in the axial directions. The stepped sleeve 78 is secured and retained by a lock nut 79 that is screwed to the male thread portion 78b. The stepped sleeve 78 faces the end surface of the axle hub 61 with a small gap in the axial directions therebetween, so that even if the thread coupling with the wheel-side housing 71 loosens, the stepped sleeve 78 will contact the end surface of the axle hub 61 and will thus be prevented from falling off.

In the detector A3 constructed as described above, the entire vertical load and the entire rotational load transferred between the wheel-side housing 71 and the hub-side housing 72 are transferred via one pair of the force transfer paths Ta, Tb provided in each coupling support portion TS 1 to TS4, and the forward rotation-side load detection element S1a to S4a and the reverse rotation-side load detection element S1b to S4b that are interposed in the force transfer paths Ta, Tb. Furthermore, the entire axial-direction load transferred between the wheel-side housing 71 and the hub-side housing 72 is transferred via the balls 74a and 74b and the balls 77 and the stepped sleeve 78.

In this embodiment, similarly to the first and second embodiments, the absolute value of the gradient of the output corresponding to the transfer load on each forward rotation-side load detection element S1a to S4a and the absolute value of the gradient of the output corresponding to the transfer load on each reverse rotation-side load detection element S1b to S4b are set substantially equal to each other, as shown in FIG. 4. In addition, the outputs of each forward rotation-side load detection element S1a to S4a and each reverse rotation-side load detection element S1b to S4b when the transfer load is zero are set at an intermediate value Vo that is between a maximum output value Vmax and a minimum output value Vmin.

The detector A3 and the computing unit B in the third embodiment are similar to those in the first and second embodiments. The detector A1 in FIG. 3 corresponds to the detector A3 in this embodiment. The detector body 30 includes a signal processing circuit 31, a transmitter 32, an electric power source 33, etc., as conceptually illustrated by the block diagram in FIG. 3. The detector body 30 is integrally secured to the hub-side housing 72. The signal processing circuit 31 supplies outputs V1a to V4a of the forward rotation-side load detection elements S1a to S4a, and outputs V1b to V4b of the reverse rotation-side load detection elements S1b to S4b, to the transmitter 32. The transmitter 32 transmits the supplied outputs S1a to S4a of the forward rotation-side load detection elements S1a to S4a and the supplied outputs S1b to S4b of the reverse rotation-side load detection elements S1b to S4b, as electromagnetic waves, to a receiver 41 of the computing unit B. The electric power source 33 supplies electric power that is needed for the operations of the forward rotation-side load detection elements S1a to S4a, the reverse rotation-side load detection elements S1b to S4b, the signal processing circuit 31, the transmitter 32, etc.

The computing unit B, as conceptually illustrated by the block diagram in FIG. 3, includes the receiver 41, a signal processing device 42, etc., and is mounted on the vehicle body side, and is connected to a vehicle control device C. The receiver 41 supplies the outputs V1a to V4a and outputs V1b to V4b received from the transmitter 32, to the signal processing device 42.

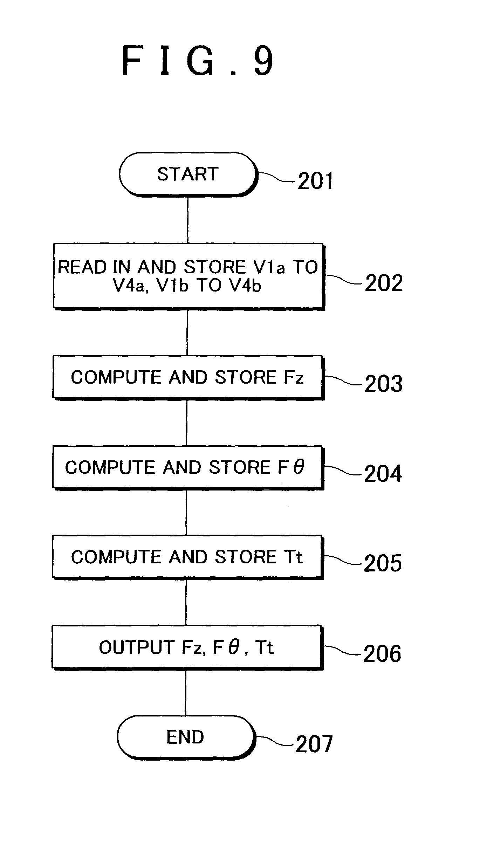

The signal processing device 42 has a microcomputer that repeatedly executes a program corresponding to the flowchart of FIG. 9, in every predetermined very short computation cycle. The vertical load Fz and the rotational load Fθ between the wheel-side housing 71 and the hub-side housing 72 computed on the basis of the outputs V1a to V4a and the outputs V1b to V4b from the receiver 41, and the transfer torque Tt computed on the basis of the rotational load Fθ and the radius R3 shown in FIG. 8 are supplied (output) to the vehicle control device C. The vehicle control device C includes an actuator (not shown) that controls the state of the vehicle, and a controller (not shown) that drives the actuator and controls the state of driving the actuator.

In the acting force detection apparatus constructed as described above, while the ignition switch (not shown) of the vehicle is on, the microcomputer of the signal processing device 42 repeatedly executes the program corresponding to the flowchart of FIG. 9 in every predetermined very short cycle to compute a vertical load Fz and a rotational load Fθ and a transfer torque Tt that are needed at the vehicle control device C, on the basis of the outputs Va1 to V4a and the outputs Vb1 to Vb4 from the receiver 41, and stores them in the signal processing device 42, and supplies them to the vehicle control device C.

The microcomputer of the signal processing device 42 starts the process at step 201 in FIG. 9. At step 202, the microcomputer reads in and stores the outputs V1a to V4a of the forward rotation-side load detection elements S1a to S4a and the V1b to V4b of the reverse rotation-side load detection elements S1b to S4b. Then, the microcomputer of the signal processing device 42 computes and stores a vertical load Fz at step 203, computes and stores a rotational load Fθ at step 204, computes and stores a transfer torque Tt at step 205, and outputs the vertical load Fz, the rotational load Fθ and the transfer torque Tt at step 206. At step 207, the execution of the program is ended.

The vertical load Fz is computed at step 203 from the following equation 4. The rotational load Fθ is computed at step 204 from the following equation 5. The transfer torque Tt is computed at step 205 from the following equation 6.

$$Fz = Kz \times \{(XZ1-XZ3)^2 + (XZ2-XZ4)^2\}^{1/2} \quad \text{(equation 4)}$$

where Kz is a correction factor predetermined by experiments or analysis; and

$$XZ1 = (V1a-V1b), \ XZ2 = (V2a-V2b),$$

$$XZ3 = (V3a-V3b), \ \text{and} \ XZ4 = (V4a-V4b).$$

$$F\theta = K\theta \times (XZ1+XZ2+XZ3+XZ4) \quad \text{(equation 5)}$$

where Kθ is a correction factor predetermined by experiments or analysis.

$$Tt = Kt \times F\theta \times R3 \quad \text{(equation 6)}$$

where Kt is a correction factor predetermined by experiments or analysis.

Incidentally, in the acting force detection apparatus of this embodiment, the entire vertical load and the entire rotational load transferred between the wheel-side housing 71 and the hub-side housing 72 are transferred via one pair of the force transfer paths Ta, Tb provided in each coupling support portion TS1 to TS4, and the forward rotation-side load detection element S1a to S4a and the reverse rotation-side load detection element S1b to S4b that are interposed in the force transfer paths Ta, Tb. Therefore, at step 203, at which a vertical load Fz between the wheel-side housing 71 and the hub-side housing 72 is computed on the basis of the outputs V1a to V4a and V1b to V4b of the forward rotation-side load detection elements S1a to S4a and the reverse rotation-side load detection elements S1b to S4b, it is possible to compute the vertical load Fz between the wheel-side housing 71 and the hub-side housing 72 with high precision. Thus, the vertical load Fz between the wheel-side housing 71 and the hub-side housing 72 can be detected with high precision.

Furthermore, in the acting force detection apparatus of this embodiment, four coupling support portions TS1 to TS4 are disposed at equal intervals in the circumferential direction. Therefore, the coupling support portions TS1 to TS4 each having a forward rotation-side load detection element S1a to S4a and a reverse rotation-side load detection element S1b to S4b are disposed with 90-degree phase differences. Hence, the vertical load Fz between the wheel-side housing 71 and the hub-side housing 72 can easily be computed by using the square root of the sum of the squares of the calculated values obtained through computation of the output differences between the forward rotation-side load detection elements S1a to S4a and the reverse rotation-side load detection elements S1b to S4b of 180-degree-phase-different two of the coupling support portions TS 1 to TS4.

Still further, in the acting force detection apparatus of this embodiment, each force transfer path Ta, Tb of each coupling support portion TS 1 to TS4 is provided with a screw 75a, 75b (load application means), so that a predetermined load can be applied to the forward rotation-side load detection elements S1a to S4a and the reverse rotation-side load detection elements S1b to S4b. Therefore, the initial value of the transfer load between the wheel-side housing 71 and the hub-side housing 72 can be adjusted on the basis of the amount of advancement/retraction of each screw 75a, 75b.

Therefore, the screws 75a, 75b make it possible to correct the outputs V1a to V4a and V1b to V4b of the forward rotation-side load detection elements S1a to S4a and the reverse rotation-side load detection elements S1b to S4b and to precisely adjust the initial state of the acting force detection apparatus. Furthermore, using the screws 75a, 75b of the force transfer paths Ta, Tb, it is possible to eliminate the play and rattle in the rotation directions and radial directions between the wheel-side housing 71 and the hub-side housing 72. Therefore, it is possible to eliminate the occurrence of unusual noise or friction caused by the aforementioned play and rattle.

In the acting force detection apparatus of this embodiment, the ball-side end portion of each screw 75a, 75b is provided with a spherical surface seat 75a1, 75b1 whose curvature is smaller than the curvature of the surface of each ball 74a, 74b. On the spherical surface seat 75a1, 75b1, each screw 75a, 75b contacts the corresponding ball 74a, 74b. Therefore, the balls 74a, 74b and the spherical surface seats 75a1, 75b1 have a point contact, which allows improvement in workability in adjusting the initial value of the transfer load between the wheel-side housing 71 and the hub-side housing 72 by the amounts of advancement/retraction of the screws 75a, 75b.

Still further, the acting force detection apparatus of this embodiment has step 204 of computing the rotational load Fθ between the wheel-side housing 71 and the hub-side housing 72 on the basis of the outputs V1a to V4a and V1b to V4b of the forward rotation-side load detection elements S1a to S4a and the reverse rotation-side load detection elements S1b to S4b, and therefore is able to compute the rotational load Fθ. Furthermore, the acting force detection apparatus of this embodiment is able to use the forward rotation-side load detection elements S1a to S4a and the reverse rotation-side load detection elements S1b to S4b not only for detection of vertical load but also for detection of rotational load.

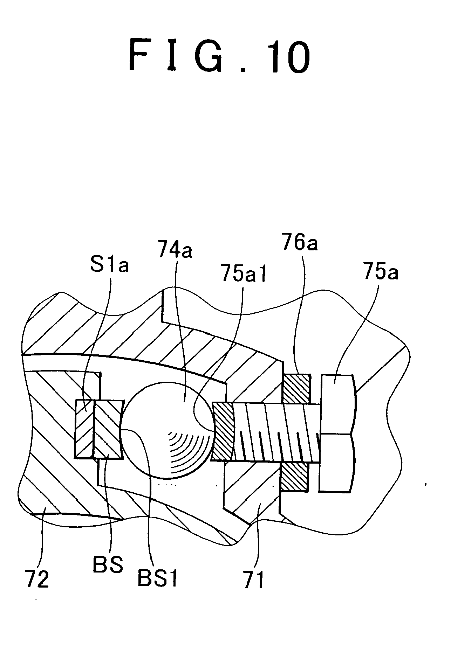

In the detector A3 of the foregoing embodiment, the balls 74a, 74b are directly engaged with (in direct contact with) the forward rotation-side load detection elements S1a to S4a and the reverse rotation-side load detection elements S1b to S4b. However, it is also possible to interpose a ball seat BS between the balls 74a, 74b, for example, a ball 74a in FIG. 10, and the forward rotation-side load detection elements S1a to S4a or the reverse rotation-side load detection elements S1b to S4b.

In this case, a ball-side end portion of the ball seat BS may be provided with a spherical surface seat BS1 as a center alignment means for aligning the center of the ball with the center of the ball seat BS. In this construction, the curvature of the spherical surface seat BS1 is smaller than the curvature of the ball 74a, and the ball seat BS contacts, on its spherical surface seat BS1, the ball 74a. Incidentally, the spherical surface seat BS1 as a center alignment means for aligning the center of the ball 74a and the center of the ball seat BS may be replaced by a tapered seat.

Yet further, in the detector A3 of the foregoing embodiment, the wheel-side housing 71 and the hub-side housing 72 are coupled via the four coupling support portions TS1 to TS4. However, the number of the coupling support portions for coupling the wheel-side housing 71 and the hub-side housing 72 is not limited to four. It is suitable that the number thereof be 3 or greater. In the case where forward rotation-side load detection elements are not disposed in the arrangement of 180-degree phase difference and reverse rotation-side load detection elements are not disposed in the arrangement of 180-degree phase difference, it is necessary that the rotation phase of the forward rotation-side load detection elements and the reverse rotation-side load detection elements at the time of computation be detected via an angle sensor, and that the outputs of the forward rotation-side load detection elements and the reverse rotation-side load detection elements be individually corrected in accordance with the rotation phase.

In the detector A3 of the foregoing embodiment, each force transfer path Ta, Tb is provided with a screw 75a, 75b (load application means). However, in the practice of the invention, it is also possible to provide a load application means (screw) for only one of the two force transfer paths or provide no load application means (screw) for either one of the force transfer paths.

In the detector A3 of the foregoing embodiment, the ball-side end portion of each screw 75a, 75b is provided with a spherical surface seat 75a1, 75b1 as a center alignment means for aligning the center of the ball 74a, 74b and the center of the screw 75a, 75b by press contact load, and the curvature of each spherical surface seat 75a1, 75b1 is smaller than the curvature of the surface of each ball 74a, 74b. However, the center alignment means provided between each screw 75a, 75b and a corresponding one of the balls 74a, 74b for aligning the center of the ball 74a, 74b and the center of the screw 75a, 75b by press contact load may be a tapered seat instead of the spherical surface seat 75a1, 75b1.

In the foregoing third embodiment, the invention is embodied in a construction for detecting the acting force transferred between the wheel 51 and the axle hub 61. However, the invention can also be embodied in various acting force detection portions other than that of the foregoing embodiment, in substantially the same manner as in the embodiment, or with suitable modifications.

**Claims**

1. A torque detection apparatus **characterized by** comprising:

   a detector (A1, A2) including a first rotating member (12) and a second rotating member (11) that are coaxially disposed, and that are capable of transferring torque and being relatively rotated in a forward rotation direction and a reverse rotation direction, a forward rotation-side load detection element (S1a to S4a) that is mounted on a forward rotation transfer side of each of the first rotating member (12) and the second rotating member (11), and that converts a forward rotation-side transfer load which increases at a time of forward rotation and decreases at a time of reverse rotation, into an electric signal, and that outputs the electric signal, and a reverse rotation-side load detection element (S1b) to S4b) that is mounted on a reverse rotation transfer side of each of the first rotating member (12) and the second rotating member (11), and that converts a reverse rotation-side transfer load which increases at a time of reverse rotation and decreases at a time of forward rotation, into an electric signal, and that outputs the electric signal; and
   a computing unit (B) that computes a transfer torque between the first rotating member (12) and the second rotating member (11) based on an output of the forward rotation-side load detection element (S1a to S4a) and an output of the reverse rotation-side load detection element (S1b to S4b),
   wherein an entire amount of the transfer torque transferred between the first rotating member (12) and the second rotating member (11) in the detector (A1, A2) is transferred via the forward rotation-side load detection element (S1a to S4a) and the reverse rotation-side load detection element (S1b to S4b).

2. The torque detection apparatus according to claim 1, wherein the detector (A1, A2) has load application means (18, 19) capable of applying a forward rotation-side transfer load to the forward rotation-side load detection element (S1a to S4a) and also applying a reverse rotation-side transfer load to the reverse rotation-side load detection element (S1b to S4b).

3. The torque detection apparatus according to claim 2, wherein the load application means (18, 19) is adjustable in load by a screw (18).

4. The torque detection apparatus according to any one of claims 1 to 3, wherein the forward rotation-side load detection element (S1a to S4a) and the reverse rotation-side load detection element (S1b to S4b) are disposed on the same circumference about a rotation center of the first rotating member (12) and the second rotating member (11), and an absolute value of a gradient of output corresponding to the load on the forward rotation-side load detection element (S1a to S4a) and an absolute value of output corresponding to the load on the reverse rotation-side load detection element (S1b to S4b) are set substantially equal.

5.  The torque detection apparatus according to claim 4, wherein the rotation center of the first rotating member (12) and the second rotating member (11) extends in a horizontal direction, and at least one pair of forward rotation-side load detection elements (S1a to S4a) and at least one pair of reverse rotation-side load detection elements (S1b to S4b) are disposed with a 180-degree phase difference for each pair in the rotation directions.

6.  The torque detection apparatus according to claim 1, wherein each of the forward rotation-side load detection element (S1a to S4a) and the reverse rotation-side load detection element (S1b to S4b) is at least one of a strain gauge and a piezoelectric element.

7.  A torque detection method using the torque detection apparatus of claim 4, **characterized by** comprising:

    reading in an average output (Va) of the forward rotation-side load detection element (S1a to S4a) and an average output (Vb) of the reverse rotation-side load detection element (S1b to S4b);
    performing abforwardity determination regarding the forward rotation-side load detection element (S1a to S4a) and the reverse rotation-side load detection element (S1b to S4b);
    computing a voltage value (Vt) corresponding to a transfer load (F) based on a result of the abforwardity determination and computing the transfer load (F) based on the voltage value; and
    calculating a transfer torque by multiplying the transfer load (F) by a distance (R1) from the rotation center to the forward rotation-side load detection element (S1a to S4a) and the reverse rotation-side load detection element (S1b to S4b).

8.  The torque detection method according to claim 7, wherein if both the forward rotation-side load detection element (S1a to S4a) and the reverse rotation-side load detection element (S1b to S4b) are forward, the voltage value Vt corresponding to the transfer load F is computed based on a present value Va1 of an average output Va of the forward rotation-side load detection element (S1a to S4a) and a present value Vb1 of an average output Vb of the reverse rotation-side load detection element (S1b to S4b), using an equation: $Vt=(Va1-Vb1)/2$.

9.  The torque detection method according to claim 7, wherein if the forward rotation-side load detection element (S1a to S4a) is forward and the reverse rotation-side load detection element (S1b to S4b) is abforward, the voltage value Vt corresponding to the transfer load F is calculated based on a present value Va1 of an average output Va of the forward rotation-side load detection element (S1a to S4a), which is forward, and fixed values Va2f, Vb2f which are average outputs of the forward rotation-side load detection element (S1a to S4a) and the reverse rotation-side load detection element (S1b to S4b) provided when both the forward rotation-side load detection element (S1a to S4a) and the reverse rotation-side load detection element (S1b to S4b) were last forward, using an equation:

$$Vt=(Va2f-Vb2f)/2 + (Va1-Va2f).$$

10. The torque detection method according to claim 7, wherein if the forward rotation-side load detection element (S1a to S4a) is abforward and the reverse rotation-side load detection element (S1b to S4b) is forward, the voltage value Vt corresponding to the transfer load F is calculated based on a present value Vb1 of an average output Vb of the reverse rotation-side load detection element (S1b to S4b), which is forward, and fixed values Va2f, Vb2f which are average outputs of the forward rotation-side load detection element (S1a to S4a) and the reverse rotation-side load detection element (S1b to S4b) provided when both the forward rotation-side load detection element (S1a to S4a) and the reverse rotation-side load detection element (S1b to S4b) were last forward, using an equation:

$$Vt=(Va2f-Vb2f)/2 + (Vb1-Vb2f).$$

11. An acting force detection apparatus comprising:

    a first rotating member (71) that integrally retains a rotating body (11) that has, at an outer periphery thereof, an annular ground contact surface, and that rotates while rolling on the ground contact surface;
a second rotating member (72) that is provided so as to be relatively rotatable with respect to the first rotating member (71) and be relatively displaceable in a radial direction with respect to the first rotating member (71), and that is integrally supported on a support (12);
at least three coupling support portions (TS1 to TS4) disposed at predetermined intervals in a circumferential direction which each have a pair of force transfer paths (Ta, Tb) that are disposed facing each other in the circumferential direction and that are capable of transferring a rotational load and a vertical load between the first rotating member (71) and the second rotating member (72), and which couple the first rotating member (71) and the second rotating member (72) so that the rotational load and the vertical load on the first rotating member (71) and the second rotating member (72) are capable of being transferred;
a forward rotation-side load detection element (S1a to S4a) that is interposed in one of the pair of force transfer paths (Ta, Tb), and that converts a forward rotation-side transfer load which increases at a time of forward rotation when the first rotating member (71) relatively rotates in one direction with respect to the second rotating member (72), and which decreases at a time of reverse rotation, into an electric signal, and that outputs the electric signal;
a reverse rotation-side load detection element (S1b to S4b) that is interposed in the other one of the pair of force transfer paths (Ta, Tb), and that converts a reverse rotation-side transfer load which increases at a time of reverse rotation when the first rotating member (71) relatively rotates in the other direction with respect to the second rotating member (72), and which decreases at a time of forward rotation, into an electric signal, and that outputs the electric signal; and
vertical load computation means (B) for computing a vertical load transferred between the first rotating member (71) and the second rotating member (72) based on an output of the forward rotation-side load detection element (S1a to S4a) and an output of the reverse rotation-side load detection element (S1b to S4b) in a construction where an entire portion of the vertical load transferred between the first rotating member (71) and the second rotating member (72) is transferred via the force transfer paths (Ta, Tb), and via the forward rotation-side load detection element (S1a to S4a) and the reverse rotation-side load detection element (S1b to S4b) respectively interposed in the force transfer paths (Ta, Tb).

12. The acting force detection apparatus according to claim 11, wherein four coupling support portions (TS1 to TS4) are disposed at equal intervals in the circumferential direction.

13. The acting force detection apparatus according to claim 11 or 12, wherein a predetermined load is able to be applied to at least one of the forward rotation-side load detection element (S1a to S4a) and the reverse rotation-side load detection element (S1b to S4b) by load application means (75a, 75b) that is provided on at least one of the force transfer paths (Ta, Tb).

14. The acting force detection apparatus according to claim 13, wherein each force transfer path (Ta, Tb) has a ball (74a, 74b) that engages with a corresponding one of the detection elements (S1a to S4a, S1b to S4b), and a screw (75a, 75b) capable of pushing the ball toward the corresponding one of the detection elements (S1a to S4a, S1b to S4b), and an initial value of the transfer load between the first rotating member (71) and the second rotating member (72) is adjustable by an amount of advancement/retraction of the screw (75a, 75b).

15. The acting force detection apparatus according to claim 14, wherein center alignment means (BS1) for aligning a center of the ball (74a, 74b) and an axis of the screw (75a, 75b) by press contact load is provided between the screw (75a, 75b) and the ball (74a, 74b).

16. The acting force detection apparatus according to claim 15, wherein the center alignment means (BS1) is a spherical surface seat (75a1, 75b1) provided on a ball (74a, 74b)-side end portion of the screw (75a, 75b), and a curvature of the spherical surface seat (75a1, 75b1) is set smaller than a curvature of the ball (74a, 74b), and the screw (75a, 75b) contacts, on the spherical surface seat (75a1, 75b1) thereof, the ball (74a, 74b).

17. The acting force detection apparatus according to claim 14, wherein a ball seat (BS) capable of transferring load is interposed between the ball (74a, 74b) and a corresponding one of the detection elements (S1a to S4a, S1b to S4b), and center alignment means (BS1) for aligning a center of the ball (74a, 74b) and an axis of the ball seat (BS) by press contact load is provided between the ball seat (BS) and the ball (74a, 74b).

18. The acting force detection apparatus according to claim 17, wherein the center alignment means (BS1) is a spherical surface seat (75a1, 75b1) provided on a ball (74a, 74b)-side end portion of the ball seat (BS), and a curvature of the spherical surface seat (75a1, 75b1) is set smaller than a curvature of the ball (74a, 74b), and the ball seat (BS) contacts, on the spherical surface seat (75a1, 75b1) thereof, the ball (74a, 74b).

**19.** The acting force detection apparatus according to claim 17, wherein the center alignment means (BS1) is a tapered seat provided on a ball (74a, 74b)-side end portion of the ball seat (BS), and the ball seat (BS) contacts, on the tapered seat thereof, the ball (74a, 74b).

**20.** The acting force detection apparatus according to any one of claims 11 to 19, **characterized by** further comprising:

rotational load computation means (B) for computing a rotational load transferred between the first rotating member (71) and the second rotating member (72) based on an output of the forward rotation-side load detection element (S1a to S4a) and an output of the reverse rotation-side load detection element (S1b to S4b) in a construction where an entire portion of the rotational load transferred between the first rotating member (71) and the second rotating member (72) is transferred via the force transfer paths (Ta, Tb), and via the forward rotation-side load detection element (S1a to S4a) and the reverse rotation-side load detection element (S1b to S4b) respectively interposed in the force transfer paths (Ta, Tb).

# FIG.1

# FIG.2

# FIG.3

DETECTOR A1

DETECTOR BODY 30

| | |
|---|---|
| S1a — FORWARD ROTATION-SIDE LOAD DETECTION ELEMENT | |
| S2a — FORWARD ROTATION-SIDE LOAD DETECTION ELEMENT | |
| S3a — FORWARD ROTATION-SIDE LOAD DETECTION ELEMENT | |
| S4a — FORWARD ROTATION-SIDE LOAD DETECTION ELEMENT | |
| S1b — REVERSE ROTATION-SIDE LOAD DETECTION ELEMENT | |
| S2b — REVERSE ROTATION-SIDE LOAD DETECTION ELEMENT | |
| S3b — REVERSE ROTATION-SIDE LOAD DETECTION ELEMENT | |
| S4b — REVERSE ROTATION-SIDE LOAD DETECTION ELEMENT | |

SIGNAL PROCESSING CIRCUIT 31

TRANSMITTER 32

ELECTRIC POWER SOURCE 33

COMPUTING UNIT B

RECEIVER 41

SIGNAL PROCESSING UNIT 42

VEHICLE CONTROL UNIT C

EP 1 750 108 A1

# FIG.4

VOLTAGE

Vmax

Vo

Vmin

OUTPUT CHARACTERISTIC OF S1a TO S4a

OUTPUT CHARACTERISTIC OF S1b TO S4b

REVERSE ROTATION
DIRECTION LOAD

0

FORWARD ROTATION
DIRECTION LOAD

EP 1 750 108 A1

# FIG.5

START —101

READ IN Va, Vb
AND STORE AS
Va1, Vb1 —102

103
S2
ABNORMAL? —— Yes

No 104
S1
ABNORMAL? Yes

121
INCREMENT Cb

111
INCREMENT Ca

105
$$vt = \frac{Va1 - Vb1}{2}$$

122
Cb = 1?
No / Yes

123
STORE Va2, Vb2
AS Va2f, Vb2f

RESET Ca,
Cb TO ZERO
106

112
Ca = 1?
No / Yes 113

STORE Va2, Vb2
AS Va2f, Vb2f

124
$$vt = \frac{Va2f - Vb2f}{2} + (Vb1 - Vb2f)$$

114
$$vt = \frac{Va2f - Vb2f}{2} + (Va1 - Va2f)$$

STORE Va1 , Vb1
AS Va2, Vb2 —107

COMPUTE
TRANSFER LOAD
F BASED ON Vt —108

COMPUTE TRANSFER TORQUE
BASED ON F, AND OUTPUT
COMPUTED TRANSFER TORQUE —109

RETURN —110

# FIG.6

# F I G . 7

# F I G . 8

# FIG. 9

START ~201

READ IN AND STORE V1a TO V4a, V1b TO V4b ~202

COMPUTE AND STORE Fz ~203

COMPUTE AND STORE F$\theta$ ~204

COMPUTE AND STORE Tt ~205

OUTPUT Fz, F$\theta$, Tt ~206

END ~207

# FIG.10

**European Patent**
**Office**

**EUROPEAN SEARCH REPORT**

Application Number

EP 06 01 6271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 3 867 838 A (GERRESHEIM MANFRED) 25 February 1975 (1975-02-25)<br>* abstract; figures 1-4 *<br>* column 1, line 6 - line 20 *<br>* column 4, line 13 - column 5, line 30 *<br>----- | 1-8<br><br>9-13,20<br>14-19 | INV.<br>G01L5/00<br>G01M17/013<br>B60T8/52 |
| Y | US 4 573 362 A (AMLANI KISHAN D [US]) 4 March 1986 (1986-03-04)<br>* abstract; figures 6,7 *<br>* column 5, line 58 - column 6, line 38 *<br>----- | 9-13,20 | |
| | | | TECHNICAL FIELDS SEARCHED (IPC)<br><br>G01L<br>G01M<br>B60T |

The present search report has been drawn up for all claims

| Place of search | Date of completion of the search | Examiner |
|---|---|---|
| Munich | 7 November 2006 | Helm, Bernhard |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons
........................................................................
& : member of the same patent family, corresponding
 document

EPO FORM 1503 03.82 (P04C01)

**ANNEX TO THE EUROPEAN SEARCH REPORT
ON EUROPEAN PATENT APPLICATION NO.**

EP 06 01 6271

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2006

| Patent document cited in search report | | Publication date | Patent family member(s) | | Publication date |
|---|---|---|---|---|---|
| US 3867838 | A | 25-02-1975 | NONE | | |
| US 4573362 | A | 04-03-1986 | EP | 0168998 A2 | 22-01-1986 |
| | | | JP | 61035322 A | 19-02-1986 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003014563 A